# EUROPEAN PATENT APPLICATION

(11) **EP 3 395 288 A2**
(43) Date of publication of application: **31.10.2018**
(21) Application number: 18167983.8
(22) Date of filing: 18.04.2018
(51) Int. Cl.: A61C 13/00, A61C 13/08, A61C 13/12, A61C 13/16

(54) **PROCESSING TARGET MOLD AND POST-SHAPING ITEM PRODUCTION METHOD**

(30) Priority: 28.04.2017 JP 2017089888
(71) Applicant: Roland DG Corporation, Shizuoka 431-2103 (JP)
(72) Inventor: SAITO, Koji, Hamamatsu-shi, Shizuoka 431-2103 (JP); ISOBE, Sachino, Hamamatsu-shi, Shizuoka 431-2103 (JP)
(74) Representative: Grünecker Patent- und Rechtsanwälte PartG mbB

(57) **Abstract**

A processing target mold is usable to form, by molding, a processing target to be shaved by a shaving device. The processing target includes a hold portion held by the shaving device, a target portion to be formed into a post-shaving item, and a coupling portion coupling the hold portion with the target portion. A main body of the processing target mold includes a bottom member, an outer frame member extending upward from the bottom member, and a protruding member extending upward from a portion of the bottom member that is enclosed by the outer frame member as seen in a plan view. The main body is provided with an injection space enclosed by the bottom member and the outer frame member. A material is injected into the injection space. The injection space includes a hold space, a target space and a coupling space in which the hold portion, the target portion and the coupling portion are respectively formed by molding.

## Description

### CROSS REFERENCE TO RELATED APPLICATION

This application claims the benefit of priority to Japanese Patent Application No. 2017-089888 filed on April 28, 2017. The entire contents of this application are hereby incorporated by reference herein.

### BACKGROUND OF THE INVENTION

### 1. Field of the Invention

The present invention relates to a processing target mold and a post-shaving item production method, and in more detail, to a processing target mold usable to form, by molding, a processing target that is to be shaved by a shaving device, and a method for producing a post-shaving item by use of the processing target mold and the shaving device.

### 2. Description of the Related Art

Conventionally, a shaving device that produces an item by shaving, into a desired shape, a processing target formed, by molding, of a predetermined material such as a ceramic material, a resin or the like is known (see, for example, Japanese Laid-Open Patent Publication No. 2015-120222). The processing target is, for example, disc-shaped. In the shaving device disclosed in Japanese Laid-Open Patent Publication No. 2015-120222, a disc-shaped processing target is shaved by a processing tool in a state where the arc-shaped portion is held by a generally C-shaped hold member.

The shaving device disclosed in Japanese Laid-Open Patent Publication No. 2015-120222 shaves the disc-shaped processing target into a desired shape to produce a desired item. A conventional processing target is entirely filled with a predetermined material. A desired shape of the item may be different from the shape of the processing target. In this case, a large portion of the processing target is shaved off, and the material filing the shaved portion of the processing target is abolished.

### SUMMARY OF THE INVENTION

The present invention made in light of the above-described point has an object of providing a processing target mold allowing a processing target to be formed, by molding, of a predetermined material such that merely a small portion of the processing target is shaved off, and a post-shaving item production method usable to produce a post-shaving item by shaving the processing target.

A processing target mold according to the present invention is a processing target mold usable to form, by molding, a processing target to be shaved by a shaving device. The shaving device includes a shaving hold portion holding the processing target and a shaving portion shaving the processing target. The processing target includes a hold portion held by the shaving hold portion, a target portion to be shaved by the shaving portion to be formed into a post-shaving item, and a coupling portion coupling the hold portion and the target portion to each other. The processing target mold includes a main body. The main body includes a bottom member, an outer frame member extending upward from the bottom member, and a protruding member extending upward from a portion of the bottom member, the portion being enclosed by the outer frame member as seen in a plan view. The main body is provided with an injection space enclosed by the bottom member and the outer frame member, the injection space being a space into which a material is to be injected. The injection space includes a hold space in which the hold portion is formed by molding; a target space in which the target portion is formed by molding; and a coupling space in which the coupling portion is formed by molding.

With the processing target mold, a processing target including a hold portion, a target portion and a coupling portion is formed by molding by injecting a material into an injection space of the processing target mold. A main body of the processing target mold according to the present invention includes a protruding member extending upward from a bottom member. The protruding member forms a space in the processing target. Therefore, as compared with in a conventional case where a processing target mold is entirely filled with the target material, the amount of the target material used to form the processing target by use of the processing target mold according to the present invention is smaller by the amount corresponding to the space. This decreases the amount of the target material used for the processing target. Therefore, the portion of the processing target to be shaved off by the shaving device is suppressed small.

The present invention allows a processing target to be formed, by molding, of a predetermined material such that merely a small portion of the processing target is shaved off.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a flowchart showing a procedure of producing a post-shaving item according to a preferred embodiment.
FIG. 2 is a perspective view showing an example of post-shaving item.
FIG. 3 is a perspective view of a processing target mold according to a preferred embodiment.
FIG. 4 is a cross-sectional view of the processing target mold taken along line IV-IV in FIG. 3.
FIG. 5 is a cross-sectional view of the processing target mold taken along line V-V in FIG. 3.
FIG. 6 is a perspective view of a processing target formed by molding by use of the processing target mold.
FIG. 7 is a plan view of the processing target with an adaptor attached thereto.
FIG. 8 is a perspective view of a shaving device.
FIG. 9 is a front view of the shaving device in a state where a cover thereof is opened.
FIG. 10 is a perspective view of a tool magazine, a rotation support member and a clamp.
FIG. 11 is a block diagram of the shaving device.
FIG. 12 is a plan view of a processing target mold according to another embodiment.
FIG. 13 is a cross-sectional view of the processing target mold taken along line XIII-XIII in FIG. 12.

### DETAILED DESCRIPTION OF THE PREFERRED EMBODIMENTS

Hereinafter, preferred embodiments of a processing target mold and a post-shaving item production method according to the present invention will be described with reference to the drawings. The embodiments described below are not intended to specifically limit the present invention, needless to say. Components and portions that have the same functions will bear the same reference signs, and overlapping descriptions will be omitted or simplified optionally.

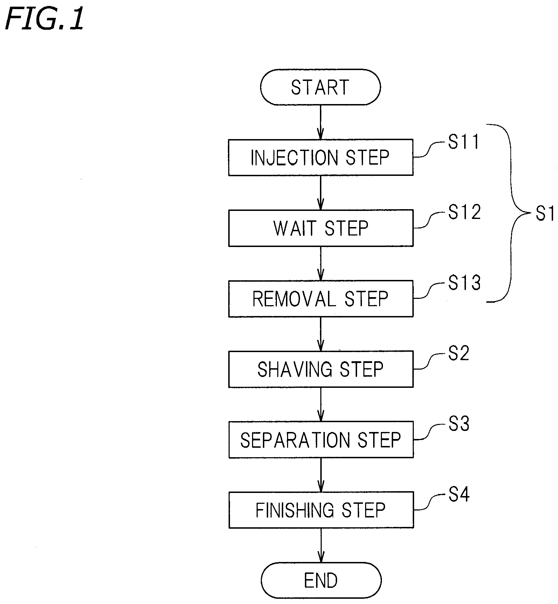

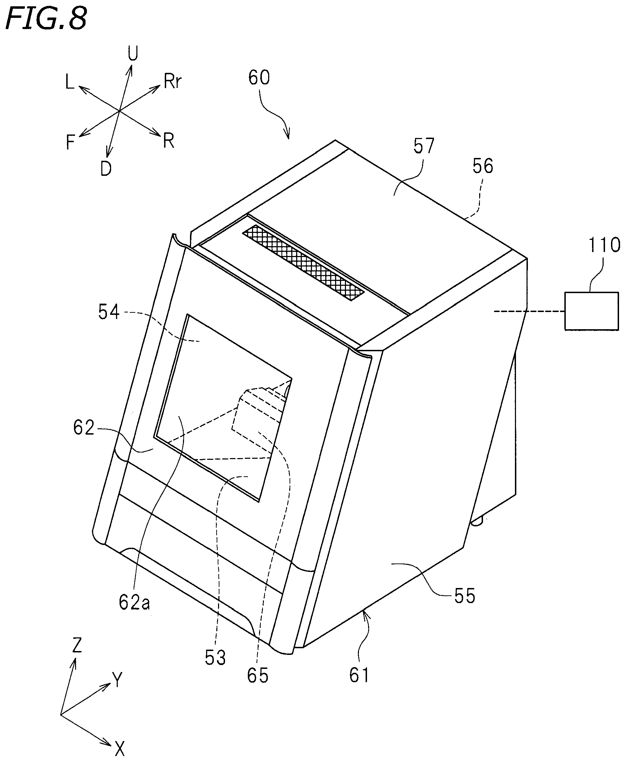

FIG. 1 is a flowchart showing a procedure of producing a post-shaving item according to a preferred embodiment. As shown in FIG. 1, the post-shaving item production method according to this preferred embodiment uses a shaving device 60 (see FIG. 8) to produce a post-shaving item. In more detail, according to the post-shaving item production method in this preferred embodiment, a processing target is formed, by molding, of a material of which a desired post-shaving item is to be produced, and the processing target is shaved by the shaving device 60 into a desired shape to produce the post-shaving item.

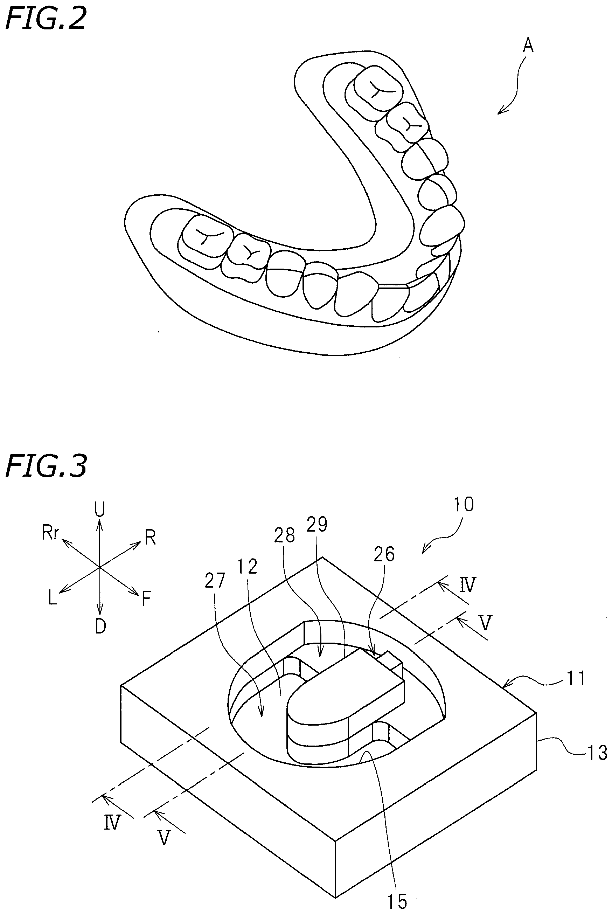

FIG. 2 is a perspective view showing an example of post-shaving item A. As shown in FIG. 2, the post-shaving item A is, for example, used in dentistry. As shown in FIG. 2, the post-shaving item A according to this preferred embodiment may be, for example, an abutment teeth model imitating a teeth model of a client. Alternatively, the post-shaving item A may be, instead of the abutment teeth model, a surgical guide usable to put an implant, a set of full dentures imitating a teeth model of a client, a dental base plate, a mouth piece or the like. The post-shaving item A is not limited to any of the above-listed items such as the abutment teeth model or the like. In the following, a method for producing an abutment teeth model as the post-shaving item A will be described.

In this preferred embodiment, as shown in FIG. 1, the post-shaving item production method includes a molding step S1, a shaving step S2, a separation step S3, and a finishing step S4. Hereinafter, each of the steps will be described in detail.

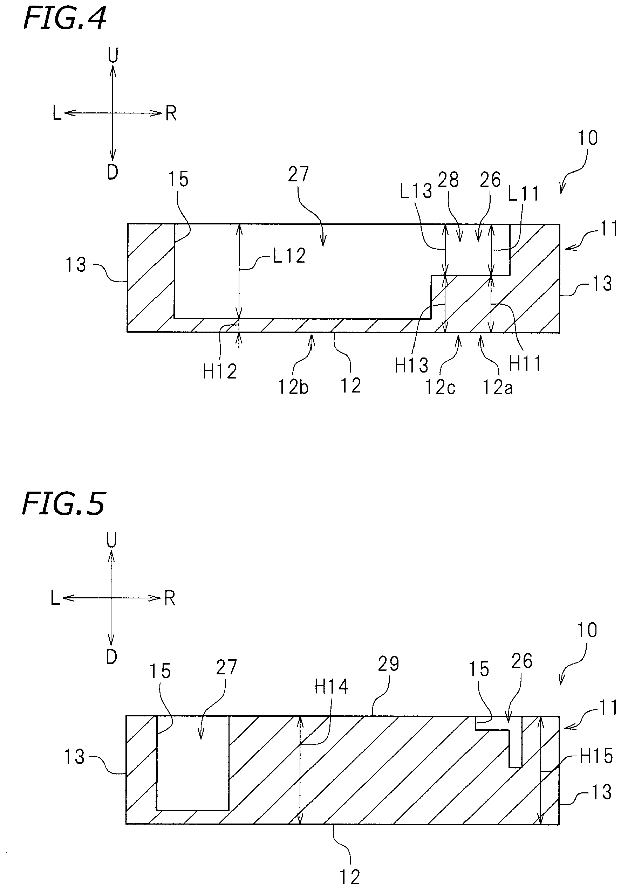

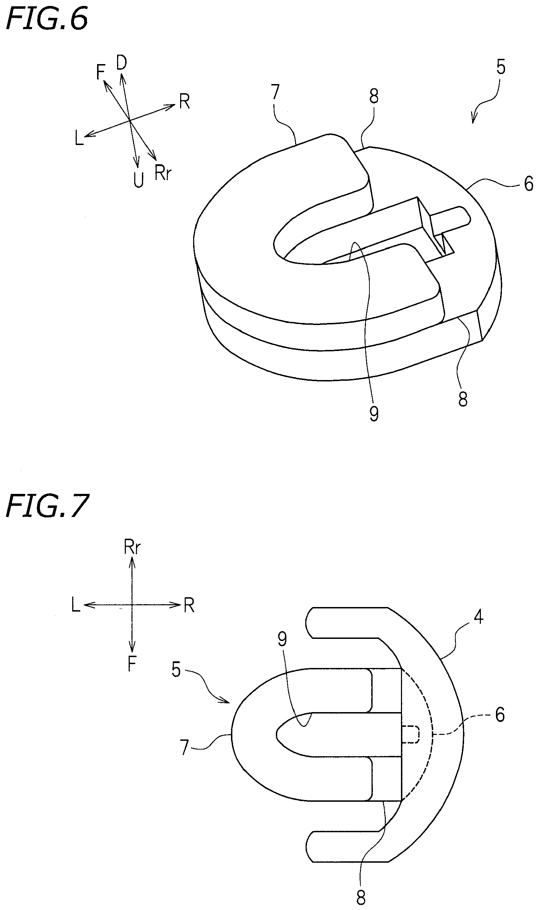

First, in the molding step S1, a processing target 5, from which the post-shaving item A is to be produced, is formed by molding. In this preferred embodiment, the molding step S1 includes an injection step S11, a wait step S12 and a removal step S13. FIG. 3 is a perspective view of a processing target mold 10 in this preferred embodiment. FIG. 4 is a cross-sectional view of the processing target mold 10 taken along line IV-IV in FIG. 3. FIG. 5 is a cross-sectional view of the processing target mold 10 taken along line V-V in FIG. 3. FIG. 6 is a perspective view of the processing target 5 formed by molding by use of the processing target mold 10. In the figures, letters F, Rr, L, R, U and D respectively refer to "front", "rear", "left", "right", "up" and "down". These directions are merely defined for the sake of convenience, and do not limit the present invention or this preferred embodiment in any way. In this preferred embodiment, in the molding step S1 in FIG. 1, the processing target mold 10 shown in FIG. 3 is used to form the processing target 5 (see FIG. 6) by molding.

The processing target mold 10 is used to form the processing target 5 by molding. Specifically, a target material is injected into an injection space 15 of a main body 11 (described below) of the processing target mold 10 to form the processing target 5 by molding. The processing target mold 10 is prepared for each of different shapes of processing target 5. The target material is used to form the processing target 5 by molding. In other words, the post-shaving item A is formed of the target material. There is no specific limitation on the type of the target material. In this preferred embodiment, the target material may is, for example, any one of plaster, polymerized resin, dental wax and the like. The target material is, for example, a dental ceramic material, a dental resin material or the like. The target material to be used varies in accordance with the type of the post-shaving item A to be produced. In the case where, for example, the abutment teeth model shown in FIG. 2 is to be produced as the post-shaving item A, plaster is used as the target material. In the case where a surgical guide, a set of full dentures, a dental base plate, a mouth piece or the like is to be produced as the post-shaving item A, polymerized resin is used as the target material.

A conventional processing target that is to be shaved by a shaving device is filled with a target material and is not provided with a space therein. By contrast, as shown in FIG. 6, the processing target 5 formed by molding by use of the processing target mold 10 is provided with a space in a portion of the inside thereof. Therefore, the amount of the target material to be used to form the processing target 5 in this preferred embodiment is smaller than the amount of the target material used to form the conventional processing target.

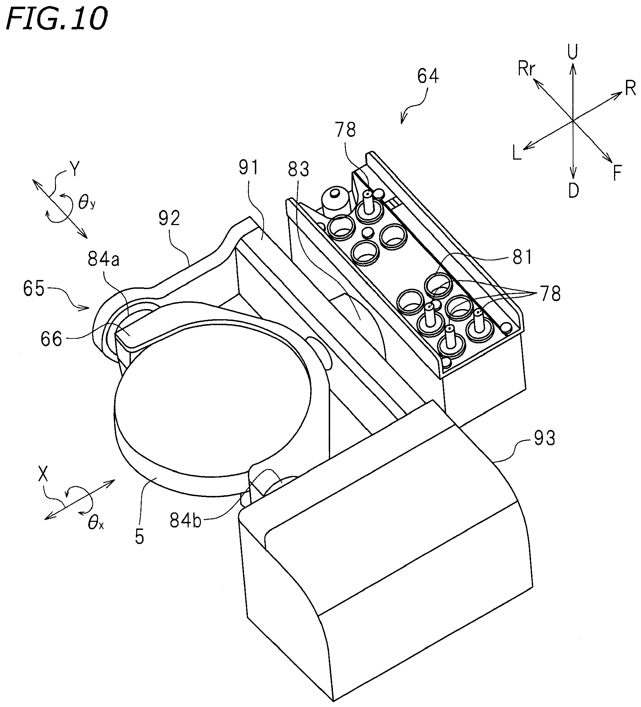

In this preferred embodiment, the processing target 5 includes a hold portion 6, a target portion 7 and a coupling portion 8. The hold portion 6 is held by a clamp 66 (described below; see FIG. 10) via an adaptor 4 (described below; see FIG. 7). A portion of the adaptor 4 is in contact with the hold portion 6. The target portion 7 is to be shaved by the shaving device 60 (see FIG. 8). The target portion 7 is shaved, and as a result, the post-shaving item A is produced. The coupling portion 8 couples the hold portion 6 and the target portion 7 to each other.

There is no specific limitation on the shape or the size of the hold portion 6, the target portion 7 or the coupling portion 8. For example, the hold portion 6 may have a shape enclosing the target portion 7 although such a shape is not shown. Alternatively, the hold portion 6 may have a shape corresponding to a portion of an inner circumferential surface of the adapter 4. The shape of the target portion 7 varies in accordance with the type of the post-shaving item A. The target portion 7 is larger, by a certain degree, than the post-shaving item A to be produced. The target portion 7 includes a curved portion in a portion thereof as seen in a plan view. At least a portion of the target portion 7 is curved. The target portion 7 has a shape along a shape of the post-shaving item A. In the case where, for example, the post-shaving item A is the abutment teeth model shown in FIG. 2, the shape of the target portion 7 is U-shaped as seen in a plan view as shown in FIG. 6. It is preferred that the coupling portion 8 is sized and shaped so as not to be broken while the processing target 5 is shaved by the shaving device 60. In this preferred embodiment, the target portion 7 has a thickness greater than a thickness of the hold portion 6 and greater than a thickness of the coupling portion 8. The thickness of the coupling portion 8 is equal to the thickness of the hold portion 6. Alternatively, the thickness of the coupling portion 8 may be greater than the thickness of the hold portion 6 or smaller than the thickness of the hold portion 6. In this preferred embodiment, the term "thickness" refers to an average thickness. In this preferred embodiment, the term "thickness" refers to a length in an up-down direction. In this preferred embodiment, the processing target 5 is provided with a space 9 enclosed by the hold portion 6, the target portion 7 and the coupling portion 8. There is no specific limitation on the number of the space(s) 9. In this example, there is one space 9. Alternatively, there may be a plurality of spaces 9. The shape and the number of the space(s) 9 are appropriately determined based on the size and the shape of each of the hold portion 6, the target portion 7 and the coupling portion 8.

Now, a structure of the processing target mold 10 will be described. In this preferred embodiment, as shown in FIG. 3, the processing target mold 10 includes the main body 11. The main body 11 is rectangular as seen in a plan view. There is no specific limitation on the shape of the main body 11. The main body 11 may be, for example, disc-shaped. In this preferred embodiment, the main body 11 is opened upward. As shown in FIG. 4, the main body 11 includes a bottom member 12 and an outer frame member 13. The outer frame member 13 extends upward from ends of the bottom member 12. Alternatively, the outer frame member 13 may extend upward from middle portions of the bottom member 12, instead of the ends of the bottom member 12.

In this example, a space enclosed by the bottom member 12 and the outer frame member 13 is the injection space 15. The target material is injected into the injection space 15. In this preferred embodiment, the injection space 15 has a shape corresponding to the shape of the processing target 5. The shape of the injection space 15 is such that the processing target 5 may fit into the injection space 15. In this preferred embodiment, the injection space 15 includes a hold space 26, a target space 27 and a coupling space 28. In the hold space 26, the hold portion 6 (see FIG. 6) of the processing target 5 is formed, by molding, of the target material. The hold space 26 has a shape corresponding to the shape of the hold portion 6. In the target space 27, the target portion 7 (see FIG. 6) of the processing target 5 is formed, by molding, of the target material. The target space 27 has a shape corresponding to the shape of the target portion 7. In the coupling space 28, the coupling portion 8 (see FIG. 6) of the processing target 5 is formed, by molding, of the target material. The coupling space 28 has a shape corresponding to the shape of the coupling portion 8.

In this preferred embodiment, as shown in FIG. 4, length L12 in the up-down direction of the target space 27 is longer than length L13 in the up-down direction of the coupling space 28, and is longer than length L11 in the up-down direction of the hold space 26. Length L13 in the up-down direction of the coupling space 28 is equal to length 11 in the up-down direction of the hold space 26. Alternatively, length L13 in the up-down direction of the coupling space 28 may be longer or shorter than length L11 in the up-down direction of the hold space 26. Lengths L11, L12 and L13 in the up-down direction of the spaces 26, 27 and 28 are each a length in the up-down direction from a lowest position of a top surface of the bottom member 12 to a highest position of the target material in the state where the target material is injected in a maximum possible amount to the spaces 26, 27 and 28.

In this preferred embodiment, height H12 of a portion 12b, of the bottom member 12, located below the target space 27 is lower than height H13 of a portion 12c, of the bottom member 12, located below the coupling space 28, and is lower than height H11 of a portion 12a, of the bottom member 12, located below the hold space 26. In this example, height H13 of the portion 12c, of the bottom member 12, located below the coupling space 28 is equal to height H11 of the portion 12a, of the bottom member 12, located below the hold space 26. Alternatively, height H13 of the portion 12c may be higher or lower than height H11 of the portion 12a. In this example, heights H11, H12 and H13 of the portions 12a, 12b and 12c are each a level of a top end of the portion 12a, 12b or 12c in the case where the processing target mold 10 is placed on a planar surface. In this preferred embodiment, the portion 12b, of the bottom member 12, located below the target space 27 has a thickness smaller than a thickness of the portion 12c, of the bottom member 12, located below the coupling space 28 and smaller than a thickness of the portion 12a, of the bottom member 12, located below the hold space 26. In this example, the thickness of the portion 12c is equal to the thickness of the portion 12a. Alternatively, the thickness of the portion 12c may be greater or smaller than the thickness of the portion 12a. Herein, the "thickness" of each of the portions 12a, 12b and 12c refers to an average thickness.

In this preferred embodiment, as shown in FIG. 5, the main body 11 includes a protruding member 29 extending upward from the bottom member 12. As shown in FIG. 3, the protruding member 29 extends upward from a portion, of the bottom member 12, that is enclosed by the outer frame member 13. The protruding member 29 forms the space 9 (see FIG. 6) in the processing target 5. The protruding member 29 has a shape corresponding to a shape of the space 9. In this example, as shown in FIG. 5, height H14 of a top end of the protruding member 29 is equal to height H15 of a top end of the outer frame member 13. Alternatively, the height H14 of the top end of the protruding member 29 may be higher or lower than height H15 of the top end of the outer frame member 13. There is no specific limitation on the number of the protruding member(s) 29 provided on the bottom member 12. There may be one protruding member 29 or a plurality of protruding members 29. The shape and the number of the protruding member (s) 29 are appropriately set based on the shape and the size of each of the hold space 26, the target space 27 and the coupling space 28. The shape and the number of the protruding member(s) 29 are appropriately set based on the shape and the size of the space(s) 9 in the processing target 5.

The main body 11, namely, the bottom member 12, the outer frame member 13 and the protruding member 29, are flexible. There is no specific limitation on the material of the main body 11. It is preferred that, for example, the main body 11 is formed of an elastic material such that a solidified target material is easily removed from the main body 11. The bottom member 12, the outer frame member 13 and the protruding member 29 of the main body 11 are formed of, for example, a resin. In this preferred embodiment, the bottom member 12, the outer frame member 13 and the protruding member 29 are formed of, for example, silicone rubber, which is usable to take a mold. The bottom member 12, the outer frame member 13 and the protruding member 29 included the main body 11 are integrally formed. Alternatively, at least one of the bottom member 12, the outer frame member 13 and the protruding member 29 may be separately formed.

The processing target mold 10 is described above. In the molding step S1 in FIG. 1, the above-described processing target mold 10 is used to form the processing target 5 by molding. Specifically, in the injection step S11 in FIG. 1, the target material is injected into the injection space 15 of the processing target mold 10. In the case where the post-shaving item A is the abutment teeth model shown in FIG. 2, plaster, which is an example of target material, is injected into the injection space 15 of the processing target mold 10 in the injection step S11 in FIG. 1. There is no specific limitation on the amount of the target material to be injected into the injection space 15. The amount of the target material to be injected into the injection space 15 is, for example, such an amount that fill the space from the top surface of the bottom member 12 to the top end of the protruding member 29.

After the target material is injected into the injection space 15 of the processing target mold 10 in the injection step S11, the procedure waits for a predetermined time duration in the wait step S12 in FIG. 1. The "predetermine time duration" is a time duration required to solidify the target material in the injection space 15. The "predetermine time duration" is a time duration from the time when the injection of the target material into the injection space 15 is finished. The "predetermine time duration" is appropriately set in accordance with the type of the target material. In the case where, for example, the target material is plaster, the predetermined time duration is about 10 minutes to about 50 minutes.

When the predetermined time duration elapses in the wait step S12 after the injection of the target material into the injection space 15 is finished, the target material in the injection space 15 is removed from the main body 11 in the removal step S13 in FIG. 1. In this example, the main body 11 is flexible. Therefore, a user can bend the main body 11 with his/her hand. In the removal step S13, the main body 11 may be bent to remove the solidified target material from the processing target mold 10. In this manner, the target material is molded by use of the processing target mold 10 to form the processing target 5 including the hold portion 6, the target portion 7 and the coupling portion 8 as shown in FIG. 6. In this example, as shown in FIG. 3, the hold portion 6 (see FIG. 6) is formed, by molding, of the target material injected into the hold space 26 of the injection space 15. The target portion 7 (see FIG. 6) is formed, by molding, of the target material injected into the target space 27 of the injection space 15. The coupling portion 8 (see FIG. 6) is formed, by molding, of the target material injected into the coupling space 28 of the injection space 15. The space 9 (see FIG. 6) enclosed by the hold portion 6, the target portion 7 and the coupling portion 8 is formed in the processing target 5 by the protruding member 29. In this manner, the processing target 5 shown in FIG. 6 is formed by molding in the molding step S1 in FIG. 1.

After the processing target 5 used to produce the post-shaving item A is formed in the molding step S1, the shaving step S2 in FIG. 1 is performed. In the shaving step S2, the target portion 7 of the processing target 5 formed by molding by use of the processing target mold 10 is shaved to produce the post-shaving item A shown in FIG. 2. In the shaving step S2 in this preferred embodiment, the shaving device 60 (see FIG. 8) is used to shave the processing target 5.

In this preferred embodiment, the shaving device 60 shaves the target portion 7 of the processing target 5 in a state of holding the processing target 5, and thus produces the post-shaving item A. FIG. 7 is a plan view of the processing target 5 with the adaptor 4 attached thereto. As shown in FIG. 7, the processing target 5 is provided with the adaptor 4 when being held by the shaving device 60. In this example, the hold portion 6 of the processing target 5 is held by the adaptor 4. The hold portion 6 of the processing target 5 is in contact with the adaptor 4. Neither the target portion 7 nor the coupling portion 8 of the processing target 5 is in contact with the adaptor 4. There is no specific limitation on the shape of the adaptor 4. The adaptor 4 has a shape corresponding to, for example, a portion of the clamp 66 (see FIG. 10). In this example, the adaptor 4 is generally C-shaped as seen in a plan view.

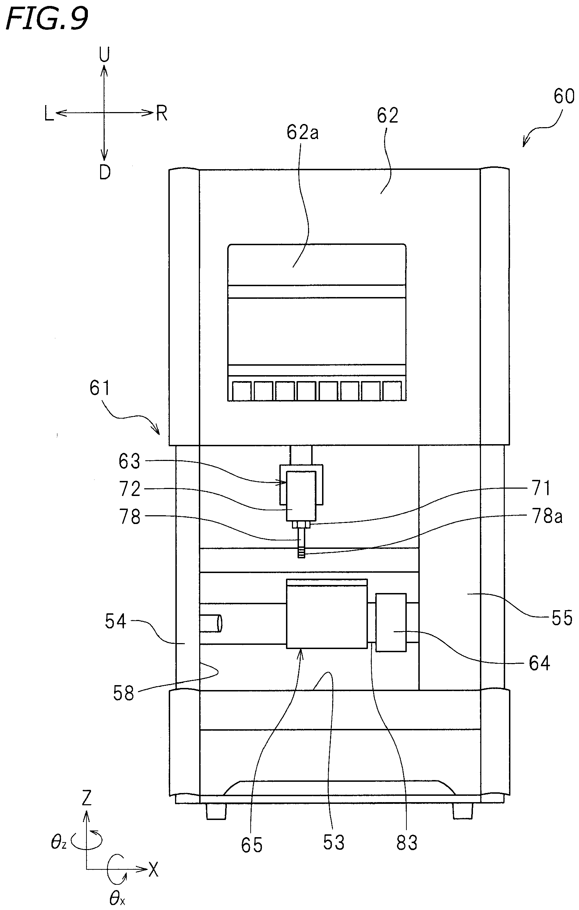

Now, the shaving device 60 usable in the shaving step S2 will be described. FIG. 8 is a perspective view of the shaving device 60. FIG. 9 is a front view of the shaving device 60. FIG. 9 shows the shaving device 60 in a state where a cover 62 thereof is opened. FIG. 10 is a perspective view of a tool magazine 64, a rotation support member 65 and the clamp 66. In the following description of the shaving device 60, the terms "left" and "right" respectively refer to left and right as seen from a user facing a front surface of the shaving device 60. As described below, a bottom wall 53 of the shaving device 60 is inclined downward as being farther from the user described above. A direction approaching the user along the bottom wall 53 is defied as "forward", and a direction distanced farther from the user along the bottom wall 53 is defined as "rearward". Among directions perpendicular to the bottom wall 53, a direction directed upward is defined as "upward" and a direction directed downward is defined as "downward". Where an X axis, a Y axis and a Z axis cross each other perpendicularly, the shaving device 60 is located on a plane defined by the X axis and the Y axis. The X axis extends in a left-right direction. The Y axis extends in a front-rear direction. The Z axis extends in the up-down direction. Reference sigs θx, θy and θz respectively represent rotation directions about the X axis, the Y axis and the Z axis. These directions are merely provided for the sake of explanation, and do not restrict the manner of installation of the shaving device 60 in any way.

In this preferred embodiment, as shown in FIG. 8, the shaving device 60 includes a shaving case main body 61, the cover 62, a spindle 63 (see FIG. 9), the tool magazine 64 (see FIG. 10), the rotation support member 65, and the clamp 66 (see FIG. 10). The shaving case main body 61 is box-shaped. The shaving case main body 61 is provided with a space therein. The shaving case main body 61 is opened forward. In this preferred embodiment, the shaving case main body 61 includes the bottom wall 53, a left wall 54, a right wall 55, a rear wall 56, and a top wall 57. Although not shown, the bottom wall 53 is inclined downward as being farther from the cover 62 and closer to the rear wall 56. The left wall 54 extends upward from a left end of the bottom wall 53. The right wall 55 extends upward from a right end of the bottom wall 53. The rear wall 56 extends upward from a rear end of the bottom wall 53. The top wall 57 is connected with top ends of the left wall 54, the right wall 55 and the rear wall 56. In this preferred embodiment, the shaving case main body 61 is opened forward. An opening 58 (see FIG. 9) is enclosed by the bottom wall 53, the left wall 54, the right wall 55 and the top wall 57. As shown in FIG. 9, the cover 62 is movable in the up-down direction along a front end of the left wall 54 and a front wall of the right wall 55 to be openable/closable. An upward movement of the cover 62 communicates the inside and the outside of the shaving case main body 61 to each other. In this preferred embodiment, the cover 62 is provided with a window 62a. The user can visually see the inner space of the shaving case main body 61 through the window 62a.

The spindle 63 uses, more specifically, rotates, a processing tool 78 to shave the processing target 5. The spindle 63 includes a tool grasping portion 71 and a rotation portion 72. The tool grasping portion 71 grasps a top end portion of the processing tool 78. In this preferred embodiment, the rotation portion 72 is provided at a top end of the tool grasping portion 71.

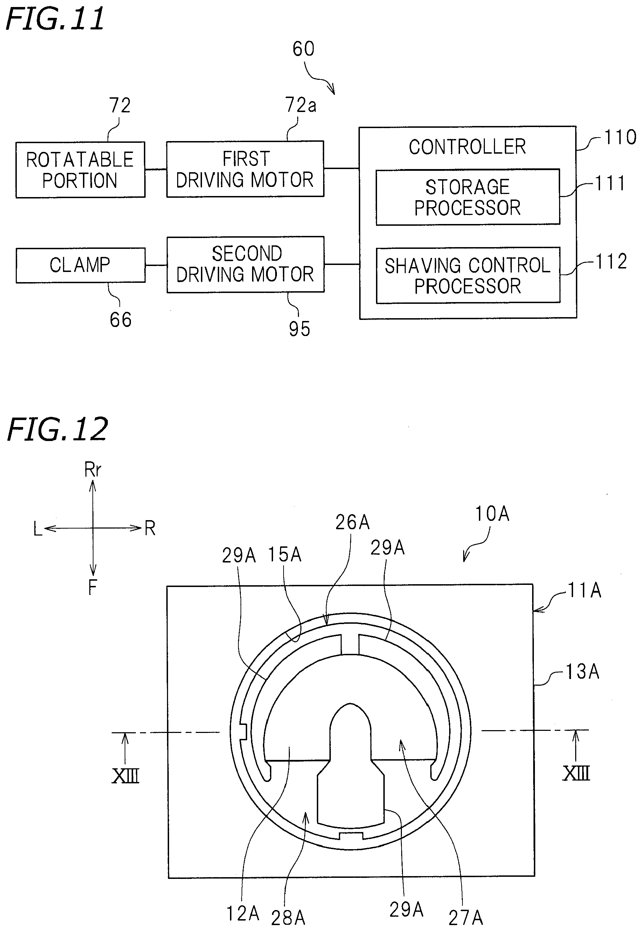

The rotation portion 72 rotates the processing tool 78 grasped by the tool grasping portion 71. The rotation portion 72 extends in the up-down direction. In this example, the rotation portion 72 is connected with a first driving motor 72a (see FIG. 11). The first driving motor 72a is driven to rotate the rotation portion 72 in the direction θz about the Z axis z. Along with the rotation of the rotation portion 72, the processing tool 78 grasped by the tool grasping portion 71 rotates in the direction θz about the Z axis z. The rotation portion 72 is movable in the left-right direction and the up-down direction by a first driving mechanism (not shown). In this preferred embodiment, the spindle 63 and the processing tool 78 are each an example of "shaving portion" of the present invention.

As shown in FIG. 10, the tool magazine 64 accommodates a plurality of the processing tools 78. In this preferred embodiment, the tool magazine 64 is box-shaped. A top surface of the tool magazine 64 is provided with a plurality of holes 81 accommodating the processing tools 78. The processing tools 78 are inserted into the holes 81 with top portions thereof being exposed. For replacing a processing tool 78 with a different processing tool 78, the processing tool 78 grasped by the tool grasping portion 71 is returned into the hole 81. Then, the tool grasping portion 71 and the rotation portion 72 are moved to a position above the processing tool 78 to be used next, and a top end of the processing tool 78 located below the tool grasping portion 71 is grasped by the tool grasping portion 71.

The tool magazine 64 is provided with a first rotation shaft 83 rotatably supporting the rotation support member 65. The first rotation shaft 83 extends in the left-right direction. The first rotation shaft 83 is coupled with the rotation support member 65. Although not shown, the tool magazine 64 includes a second driving member. The first rotation shaft 83 is rotatable in the direction θx about the X axis by the second driving member. The rotation of the first rotation shaft 83 in the direction θx about the X axis rotates the rotation support member 65 in the direction θx about the X axis.

The rotation support member 65 rotatably supports the clamp 66. The rotation support member 65 is generally C-shaped as seen in a plan view. The rotation support member 65 is coupled with the first rotation shaft 83. The rotation support member 65 includes a first portion 91 extending in the front-rear direction, a second portion 92 extending leftward from a rear end of the first portion 91, and a third portion 93 extending leftward from a front end of the first portion 91. The clamp 66 is rotatably supported by the second portion 92 and the third portion 93. In this preferred embodiment, the clamp 66 is connected with one of two ends of a second rotation axis 84a. The other end of the second rotation axis 84a is connected with the second portion 92. The clamp 66 is connected with one of two ends of a third rotation axis 84b. The other end of the third rotation axis 84b is connected with the third portion 93. Although not shown in FIG. 10, in this preferred embodiment, the third portion 93 is provided with a second driving motor 95 (see FIG. 11) rotating the clamp 66 in the direction θy about the Y axis.

The clamp 66 is a member that holds the processing target 5 while the processing target 5 is shaved. In this preferred embodiment, the clamp 66 holds the adaptor 4 (see FIG. 7) attached to the processing target 5 and holds the processing target 5 via the adaptor 4. In FIG. 10, the adaptor 4 is omitted. FIG. 10 shows the processing target 5 as being disc-shaped for the sake of convenience. In actuality, however, the processing target 5 shown in FIG. 10 is shaped as shown in FIG. 6. The clamp 66 has a shape corresponding to, for example, a portion of the adaptor 4 (see FIG. 7) attached to the processing target 5. The clamp 66 is generally C-shaped as seen in a plan view. In this preferred embodiment, the processing target 5 held by the clamp 66 is shaved. In this preferred embodiment, the clamp 66 corresponds to the "shaving hold portion" of the present invention.

Now, a controller 110 will be described. FIG. 11 is a block diagram of the shaving device 60. As shown in FIG. 11, the shaving device 60 includes the controller 110. The controller 110 controls the shaving of the processing target 5. The controller 110 is a microcomputer, and is provided in the shaving case main body 61. A portion of the controller 110 may be realized by a general-purpose computer such as a personal computer or the like. The controller 110 includes a central processing unit (CPU), a ROM having, for example, a program to be executed by the CPU stored thereon, a RAM and the like. In this example, the shaving of the processing target 5 is controlled by use of the program stored on the microcomputer. The program may be stored on, for example, a storage medium such as a CD (compact disc), a DVD (digital versatile disc) or the like, and may be read from such a storage medium. The above-described program may be downloaded via the Internet.

In this preferred embodiment, the controller 110 is electrically connected with the first driving motor 72a and the second driving motor 95. The controller 110 controls the driving of the first driving motor 72a to control the rotation of the rotation portion 72 of the spindle 63. Although not shown, the controller 110 is capable of controlling the rotation portion 72 such that the rotation portion 72 moves in the left-direction and the up-down direction. The controller 110 controls the driving of the second driving motor 95 to control the rotation of the clamp 66 in the direction θy about the Y axis. Although not shown, the controller 110 is capable of controlling the first rotation shaft 83 (see FIG. 10) such that the first rotation shaft 83 rotates in the direction θx about the X axis.

In this preferred embodiment, the controller 110 includes a storage processor 111 and a shaving control processor 112. The storage processor 111 has, for example, shaving data stored thereon. The shaving data is so-called NC data. The shaving data shows in which procedure the shaving device 60 produces the post-shaving item A. The shaving data includes a plurality of processing procedures each defining, by coordinate values, an operation of the spindle 63 (see FIG. 9) and an operation of the clamp 66 (see FIG. 10) holding the processing target 5. The shaving data is created by, for example, a computer aided manufacturing device (hereinafter, also referred to as a "CAM device"). In this preferred embodiment, the CAM device creates the shaving data based on post-shaving item data, which is data on the shape of the post-shaving item A. The post-shaving item data is STL data on the post-shaving item A. The post-shaving item data is created by, for example, a computer aided design device (hereinafter, also referred to as a "CAD device"). In this preferred embodiment, the CAM device and the CAD device are each communicably connected with the controller 110. Therefore, the shaving data created by the CAM device is stored on the storage processor 111 of the controller 110.

The shaving control processor 112 controls the shaving process based on the shaving data stored on the storage processor 111. In this preferred embodiment, the shaving control processor 112 controls the operation of the spindle 63 and the operation of the clamp 66 based on the coordinate values in the shaving data. The shaving control processor 112 comprehensively controls the overall operation of the clamp 66 as well as the operation of the spindle 63. With such an arrangement, the relative positions of the processing target 5 held by the clamp 66 and the processing tool 78 may be changed three-dimensionally, and as a result, high-precision shaving is realized by five-axis control in the X axis direction, the Y axis direction, the Z axis direction, the direction θx about the X axis and the direction θy about the Y axis. In this preferred embodiment, a blade 78a (see FIG. 9) of the processing tool 78 rotated by the spindle 63 is put into contact with the target portion 7 (see FIG. 6) of the processing target 5 held by the clamp 66, and as a result, the target portion 7 of the processing target 5 is shaved. In this example, the processing tool 78 is put into contact with an optional portion of the target portion 7 of the processing target 5, and thus the post-shaving item A is produced from the target portion 7.

The shaving device 60 in this preferred embodiment is described above. As shown in FIG. 1, in the shaving step S2, first, the adaptor 4 shown in FIG. 7 is attached to the processing target 5 formed by molding by use of the processing target mold 10. Next, still in the shaving step S2, the adaptor 4 attached to the processing target 5 is attached to the clamp 66 (see FIG. 10) of the shaving device 10, so that the clamp 66 holds the processing target 5. Then, in the shaving step S2, the shaving device 60 is used to cause the controller 110 to control the operation of the spindle 63 and the operation of the clamp 66 based on the shaving data stored on the storage processor 111. Thus, the target portion 7 of the processing target 5 is shaved. As a result, the post-shaving item A is produced from the target portion 7 of the processing target 5.

After the processing target 5 is shaved in the shaving step S2, in the separation step S3 in FIG. 1, the coupling portion 8 is separated from the post-shaving item A of the processing target 5. In the separation step S3, for example, a tool including a blade such as a cutter or the like may be used to cut away the post-shaving item A and the coupling portion 8 from each other. As a result, the post-shaving item A is separated from the coupling portion 8 and the hold portion 6. The hold portion 6 and the coupling portion 8 of the processing target 5 are to be abolished.

After the separation step S3, in the finishing step S4 in FIG. 1, a finishing process is performed on the post-shaving item A produced by shaving the target portion 7. The specific content of the finishing process varies in accordance with the type of the post-shaving item A. The finishing process includes, for example, a polishing process of polishing a surface of the post-shaving item A by use of a file or the like. This smoothes the surface of the post-shaving item A. The finishing step S4 may be omitted. In this preferred embodiment, the above-described steps are performed sequentially to produce the post-shaving item A.

As described above, in this preferred embodiment, the target material is injected into the injection space 15 of the processing target mold 10 shown in FIG. 3, so that the processing target 5 including the hold portion 6, the target portion 7 and the coupling portion 8 as shown in FIG. 6 is formed by molding. As shown in FIG. 5, the main body 11 of the processing target mold 10 includes the protruding member 29 extending upward from the bottom member 12. The protruding member 29 forms the space 9 in the processing target 5 as shown in FIG. 6. Therefore, as compared with in a conventional case where a processing target mold is entirely filled with the target material, the amount of the target material used for the processing target 5 in this preferred embodiment is smaller by the amount corresponding to the space 9. This decreases the amount of the target material used for the processing target 5.

In this preferred embodiment, the shaving device 60 shaves the target portion 7 of the processing target 5 in a state where the processing tool 78 is inserted into the space 9 of the processing target 5. Therefore, it is easy to shave a side surface of the target portion 7 by use of the processing tool 78. In this preferred embodiment, the shaving device 60 three-dimensionally changes the relative positions of the processing tool 78 grasped by the tool grasping portion 71 of the spindle 63 and the processing target 5 held by the clamp 66 to shave the processing target 5 by the five-axis control in the X axis direction, the Y axis direction, the Z axis direction, the direction θx about the X axis and the direction θy about the Y axis. Conventionally, a processing target that is not provided with the space 9 but is filled with the target material is shaved. Such a filled processing target includes inner portions that are difficult to be shaved by the five-axis control. Therefore, conventionally, a space like the space 9 is formed in the filled processing target by a processing tool before the processing target is shaved by the shaving device 60. By contrast, in this preferred embodiment, the processing target 5 may be shaved by the five-axis control in a state where the processing tool 78 is inserted into the space 9. As can be seen, the processing target 5 formed by molding by use of the processing target mold 10 does not have many portions difficult to be shaved by the five-axis control.

In this preferred embodiment, the processing target 5 is provided with the space 9 therein before being shaved by the shaving device 60. Therefore, the shaving device 60 does not need to form the space 9 in the processing target 5. This shortens the time required for the shaving by the shaving device 60.

In this preferred embodiment, as shown in FIG. 3, the main body 11 of the processing target mold 10, namely, the bottom member 12, the outer frame member 13 and the protrusion member 29, are flexible. The main body 11 is formed of, for example, a resin. After the target material injected into the injection space 15 of the main body 11 is solidified, the solidified target material is removed from the main body 11. In this step, the solidified target material may be removed from the main body 11 while the main body 11 is bent. This makes it easy to remove the solidified target material from the main body 11. The solidified target material is the processing target 5.

In this preferred embodiment, as shown in FIG. 5, the position in the up-down direction of the top end of the protruding member 29 is at the same level as the position in the up-down direction of the top end of the outer frame member 13. With such an arrangement, as shown in FIG. 6, the space 9 running through the processing target 5 is formed in the processing target 5 formed, by molding, of the target material injected into the injection space 15 of the processing target mold 10 and solidified. The space 9 is formed by the protruding member 29. As can be seen, in this preferred embodiment, the space 9, which runs through the processing target 5, is formed in the processing target 5. Therefore, as compared with for a conventional processing target, the amount of the target material to be used is smaller.

In this preferred embodiment, as shown in FIG. 4, height H12 of a top surface of the portion 12b, of the bottom member 12, located below the target space 27 is lower than height H13 of a top surface of the portion 12c, of the bottom member 12, located below the coupling space 28. Therefore, as shown in FIG. 6, in the processing target 5 formed by molding by use of the processing target mold 10, the thickness of the coupling portion 8 is smaller than the thickness of the target portion 7. The coupling portion 8 of the processing target 5 is to be abolished. The amount of the target material used for the coupling portion 8, which is to be abolished, is decreased.

In this preferred embodiment, as shown in FIG. 3, at least a portion of a surface enclosing the target space 27 is a curved surface. The post-shaving item A in this preferred embodiment is, for example, an abutment teeth model (as shown in FIG. 2), a surgical guide, a set of full dentures, a dental base plate, a mouth piece or the like. Such a post-shaving item A has a curved surface. In this example, the curved surface enclosing the target portion 27 corresponds a portion of the curved surface of the post-shaving item A. In this preferred embodiment, the target portion 7 of the processing target 5 is larger, by a certain degree, than the post-shaving item A to be produced. The target portion 7 has a shape close to that of the post-shaving item A and is shaved by the shaving device 60. Therefore, the portion of the target portion 7 that is to be shaved is suppressed small. This shortens the time required for the shaving by the shaving device 60.

In this preferred embodiment, as shown in FIG. 3, the bottom member 12, the outer frame member 13 and the protruding member 29 are integrally formed. This makes it difficult for a gap to be formed between the bottom member 12, the outer frame member 13 and the protruding member 29. Therefore, it is difficult for the target material injected into the injection space 15 to leak through a gap.

In this preferred embodiment, as shown in FIG. 1, the post-shaving item A is produced by performing the molding step S1 (in more detail, the injection step S11, the wait step S12 and the removal step S13), the shaving step S2, the separation step S3 and the finishing step S4. In this manner, the post-shaving item A having a desired shape is produced of a desired target material.

In this preferred embodiment, the target material to be injected into the injection space 15 in the injection step S11 is, for example, any one of plaster, polymerized resin, dental wax and the like. For example, a commercially available processing target may be formed of a material that is different from the material desired by the user. In this preferred embodiment, the target material chosen by the user may be injected into the processing target mold 10, and thus the processing target 5 of the desired material is formed.

In this preferred embodiment, in the shaving step S2, the processing target 5 is attached to the adaptor 4 (see FIG. 7), and the adaptor 4 attached to the processing target 5 is held by the clamp 66 (see FIG. 10). In the case where, for example, the hold portion 6 of the processing target 5 is small, it may be difficult for the hold portion 6 to be held by the clamp 66. However, in this preferred embodiment, even in the case where the hold portion 6 is small, the hold portion 6 may be put into contact with, and held by, the adaptor 4, and the adaptor 4 may be held by the clamp 66. In this manner, even in the case where the hold portion 6 is small, the processing target 5 is held by the clamp 66.

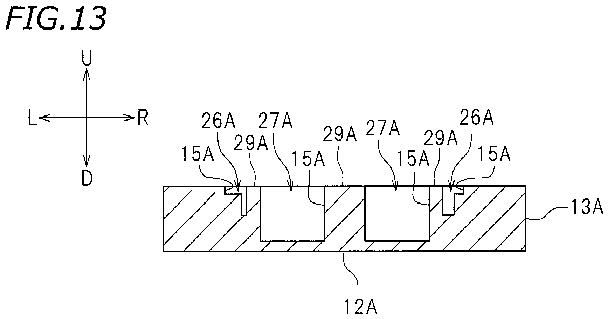

In this preferred embodiment, the processing target mold according to the present invention is the processing target mold 10 shown in FIG. 3. The processing target mold according to the present invention may be another processing target mold. FIG. 12 is a plan view of a processing target mold 10A in another embodiment. FIG. 13 is a cross-sectional view of the processing target mold 10A taken along line XIII-XIII in FIG. 12. The processing target mold according to the present invention may be, for example, the processing target mold 10A shown in FIG. 12. The processing target mold 10A includes a main body 11A. As shown in FIG. 13, the main body 11A includes a bottom member 12A and an outer frame member 13A. The main body 11A is provided with an injection space 15A therein. As shown in FIG. 12, the injection space 15A includes a hold space 26A, a target space 27A and a coupling space 28A. As shown in FIG. 13, three protruding members 29A extending upward are provided on the bottom member 12A. Even the processing target mold 10A having such a structure is also usable to form, by molding, a processing target provided with a space therein.

The components of the controller 110 of the shaving device 60 are provided as the storage processor 111 and the shaving control processor 112 in this preferred embodiment, but such components may be realized by software. Namely, each of these components may be realized by a computer by a computer program being read into the computer. The present invention encompasses a computer program that causes the computer to act as each of these components. The present invention encompasses a computer-readable storage medium having the computer program stored thereon. The processors as the components of the controller 110 may be realized by the computer program stored on the controller 110 being executed. In this case, each component may include one processor or a plurality of processors. The present invention encompasses a circuit having substantially the same function as that of the program executable by each of the components.

While preferred embodiments of the present invention have been described above, it is to be understood that variations and modifications will be apparent to those skilled in the art without departing from the scope and spirit of the present invention. The scope of the present invention, therefore, is to be determined solely by the following claims.

The terms and expressions used herein are for description only and are not to be interpreted in a limited sense. These terms and expressions should be recognized as not excluding any equivalents to the elements shown and described herein and as allowing any modification encompassed in the scope of the claims. The present invention may be embodied in many various forms. This disclosure should be regarded as providing preferred embodiments of the principle of the present invention. These preferred embodiments are provided with the understanding that they are not intended to limit the present invention to the preferred embodiments described in the specification and/or shown in the drawings. The present invention is not limited to the preferred embodiment described herein. The present invention encompasses any of preferred embodiments including equivalent elements, modifications, deletions, combinations, improvements and/or alterations which can be recognized by a person of ordinary skill in the art based on the disclosure. The elements of each claim should be interpreted broadly based on the terms used in the claim, and should not be limited to any of the preferred embodiments described in this specification or used during the prosecution of the present application.

## Claims

1. A processing target mold usable to form, by molding, a processing target (5) to be shaved by a shaving device (60), the shaving device (60) including a shaving hold portion (66) holding the processing target (5) and a shaving portion (78) shaving the processing target (5),
the processing target (5) including a hold portion (6) held by the shaving hold portion (66), a target portion (7) to be shaved by the shaving portion (78) to be formed into a post-shaving item (A), and a coupling portion (8) coupling the hold portion (6) and the target portion (7) to each other,
the processing target mold comprising a main body (11) ;
wherein:
the main body (11) includes a bottom member (12), an outer frame member (13) extending upward from the bottom member (12), and a protruding member (29) extending upward from a portion of the bottom member (12), the portion being enclosed by the outer frame member (13) as seen in a plan view;
the main body (11) is provided with an injection space (15) enclosed by the bottom member (12) and the outer frame member (13), the injection space (15) being a space into which a material is to be injected; and
the injection space (15) includes:
a hold space (26) in which the hold portion (6) is formed by molding;
a target space (27) in which the target portion (7) is formed by molding; and
a coupling space (28) in which the coupling portion (8) is formed by molding.

2. The processing target mold according to claim 1, wherein the main body (11) is flexible.

3. The processing target mold according to claim 2, wherein the main body (11) is formed of a resin.

4. The processing target mold according to any one of claims 1 through 3, wherein a position in an up-down direction of a top end of the protruding member (29) and a position in the up-down direction of a top end of the outer frame member (13) are at the same level as each other.

5. The processing target mold according to any one of claims 1 through 4, wherein a height of a top surface of a portion, of the bottom member (12), that is below the target space (27) is lower than a height of a top surface of a portion, of the bottom member (12), that is below the coupling space (28).

6. The processing target mold according to any one of claims 1 through 5, wherein at least a portion of a surface enclosing the target space (27) is a curved surface.

7. The processing target mold according to any one of claims 1 through 6, wherein the bottom member (12), the outer frame member (13) and the protruding member (29) are integrally formed.

8. A post-shaving item production method for producing a post-shaving item (A) by use of a shaving device (60), the method comprising:
an injection step (S11) of injecting a material into the injection space (15) of the processing target mold according to any one of claims 1 through 7;
a wait step (S12) of, after the material is injected into the injection space (15) in the injection step (S11), waiting for a predetermined time duration;
a removal step (S13) of, after waiting for the predetermined time duration in the wait step (S12), removing a processing target (5), formed of the material by molding, from the processing target mold;
a shaving step (S2) of shaving the target portion (7) of the processing target (5) by the shaving portion (78) of the shaving device (60) while the hold portion (6) of the processing target (5) is held by the shaving hold portion (66) of the shaving device (60); and
a separation step (S3) of, after the shaving is performed in the shaving step (S2), separating the coupling portion (8) of the processing target (5) from the target portion (7) of the processing target (5).

9. The post-shaving item production method according to claim 8, wherein the material injected into the injection space (15) in the injection step (S11) is any one of plaster, polymerized resin and dental wax.

10. The post-shaving item production method according to claims 8 or 9, wherein in the shaving step (S2), the processing target (5) is attached to an adaptor (4), and the adaptor (4) attached to the processing target (5) is held by the shaving hold portion (66).
